# FASCICULE DE BREVET EUROPEEN

(11) **EP 1 794 446 B1**
(45) Date de publication et mention de la délivrance du brevet: **01.06.2016**
(21) Numéro de dépôt: 05804224.3
(22) Date de dépôt: 22.09.2005
(51) Int. Cl.: F02N 11/10, F02D 41/24

(54) **PROCEDE DE CONTROLE D'UNE COMMANDE DE DEMARRAGE/ARRET AUTOMATIQUE D'UN VEHICULE**
VERFAHREN ZUR AUTOMATISCHEN KONTROLLE VON STARTS UND STOPPS EINES FAHRZEUGS
AUTOMATIC VEHICLE START/STOP CONTROL METHOD

(30) Priorité: 23.09.2004 FR 0410095
(43) Date de publication de la demande: 13.06.2007
(73) Titulaire: VALEO EQUIPEMENTS ELECTRIQUES MOTEUR, 94017 Créteil (FR)
(72) Inventeur: LECOLE, Brice, F-75012 Paris (FR); LAURENCE, Magali, F-75012 Paris (FR)
(74) Mandataire: de Lambilly Delorme, Marie Pierre
(86) Numéro de dépôt international: PCT/FR2005/002354
(87) Numéro de publication internationale: WO 2006/032794

(56) Documents cités:
- EP-A- 1 333 174
- DE-C1- 10 211 461
- US-A1- 2003 150 417
- US-A1- 2003 224 902
- US-A1- 2004 029 677
- US-A1- 2004 089 258
- PATENT ABSTRACTS OF JAPAN vol. 007, no. 102 (M-211), 30 avril 1983 (1983-04-30) & JP 58 023254 A (NIPPON DENSO KK), 10 février 1983 (1983-02-10)

## Description

### Domaine de l'invention

La présente invention concerne un procédé de contrôle d'une commande de démarrage/arrêt automatique d'un moteur thermique d'un véhicule, ladite commande utilisant des informations provenant de capteurs et d'un bus de communication de données, lesdites informations étant représentatives d'un état de fonctionnement du véhicule, ainsi qu'un dispositif de contrôle de mise en oeuvre dudit procédé.

La commande de démarrage/arrêt automatique est connue sous le terme anglo-saxon de « Stop and Go ».

### Etat de la technique

La commande de démarrage/arrêt automatique d'un véhicule consiste, sous certaines conditions, à provoquer l'arrêt complet du moteur thermique lorsque le véhicule est lui-même à l'arrêt, puis à redémarrer le moteur thermique à la suite, par exemple, d'une action du conducteur interprétée comme une demande de redémarrage. Une situation typique de « Stop and Go » est celle de l'arrêt à un feu rouge. Lorsque le véhicule s'arrête au feu, le moteur thermique est automatiquement stoppé, puis, quand le feu devient vert, le moteur est redémarré à la suite de la détection de l'enfoncement de la pédale d'embrayage par le conducteur ou de toute autre action qui peut être interprétée comme la volonté du conducteur de redémarrer son véhicule. On comprend l'intérêt de la commande « Stop and Go» en terme d'économie d'énergie et de réduction de la pollution, surtout en milieu urbain.

Par les documents JP58023254, US2004/0089258A1 et EP1333174A1, il est connu de commander la fonction « Stop and Go » en fonction de certaines informations représentatives d'un état de fonctionnement du véhicule et notamment d'un état anormal ou de défaut.

Ces informations proviennent généralement de capteurs du véhicule, tels que les capteurs de température de l'habitacle ou de détection de position de la pédale d'embrayage, ou des informations lues sur un bus de communication de données comme le vitesse du véhicule ou la vitesse de rotation du moteur.

### Objet de l'invention

Un problème technique à résoudre par l'objet de la présente invention est de proposer un procédé de contrôle d'une commande de démarrage/arrêt automatique d'un moteur thermique d'un véhicule, ladite commande utilisant des informations provenant de capteurs et d'un bus de communication de données, lesdites informations étant représentatives d'un état de fonctionnement du véhicule, ainsi qu'un dispositif de contrôle associé, qui permettent de définir les mesures à prendre lorsque surviennent des circonstances dans lesquelles la commande de démarrage/arrêt automatique du véhicule ne peut plus fonctionner de manière satisfaisante.

Une solution au problème technique posé consiste, selon un premier objet de la présente invention, en ce que ledit procédé de contrôle comporte les étapes de :
- tester la présence et la validité des informations fournies par lesdits capteurs, et, en cas de test négatif, définir un premier mode de la commande de démarrage/arrêt automatique,
- tester la communication avec le bus de communication de données, et en cas de test négatif, définir un deuxième mode de la commande de démarrage/arrêt automatique.

Ainsi, en l'absence d'informations en provenance des capteurs, ou si ces informations se révèlent erronées, incohérentes ou peu plausibles, le système de démarrage/arrêt automatique passe dans le premier mode.

Selon l'invention, le premier mode interdit l'arrêt du moteur thermique, mais autorise les redémarrages si les conditions de redémarrage en sont satisfaites. L'arrêt est interdit jusqu'à réalisation d'une condition de fin d'interdiction.

Par contre, si aucune communication ne peut être établie avec le bus de communication, on passe dans le deuxième mode. Ce deuxième mode est plus lourd de conséquence puisque, dans ce cas, selon l'invention, la commande de démarrage/arrêt automatique est totalement inhibée jusqu'à réalisation d'une fin d'inhibition.

Selon l'invention, lorsque les informations fournies par lesdits capteurs sont à nouveau disponibles, on met fin à ladite interdiction. De même que lorsque la communication avec le bus de communication de données est rétablie, on met fin à ladite inhibition.

On peut également prévoir que, conformément à l'invention, ladite condition de fin d'interdiction ou ladite condition de fin d'inhibition est une coupure d'alimentation d'un réseau de bord du véhicule, par exemple au moyen d'une clé de contact du véhicule. Dans ce cas, en effet, tout est réinitialisé, et le véhicule se trouve donc prêt à fonctionner à nouveau dans des conditions initiales nominales, de même que la commande de démarrage/arrêt automatique.

L'invention propose également que, dans le deuxième mode, une machine électrique tournante réversible couplée au moteur thermique du véhicule est configurée en mode alternateur, ladite machine étant destinée à démarrer automatiquement le moteur thermique du véhicule. Cette disposition découle du fait que lorsque le véhicule est équipé d'une telle machine, un alterno-démarreur par exemple, l'inhibition de la commande de démarrage/arrêt automatique interdit la machine électrique tournante réversible de fonctionner en mode démarreur, seul le mode alternateur étant autorisé.

De plus, il peut être avantageux d'informer le conducteur du passage dans le premier ou second mode décrit ci-dessus. Ainsi, selon l'invention, un signal d'avertissement de passage dans un de ces modes est activé.

Enfin, selon un mode de réalisation non limitatif, on teste les capteurs qu'en cas de test positif sur le bus de communication.

Selon un deuxième objet de l'invention, l'invention propose un dispositif de contrôle d'une commande de démarrage/arrêt automatique d'un moteur thermique d'un véhicule comportant :
- des premiers moyens pour tester la présence et la validité des informations fournies par lesdits capteurs, et, en cas de test négatif, définir un premier mode de la commande de démarrage/arrêt automatique,
- des deuxièmes moyens pour tester la communication avec le bus de communication de données, et en cas de test négatif, définir un deuxième mode de la commande de démarrage/arrêt automatique.

Selon un troisième objet de l'invention, l'invention propose une machine électrique tournante réversible comportant un dispositif de contrôle de mise en oeuvre du procédé selon l'une quelconque des caractéristiques précédentes.

La description qui va suivre en regard des dessins annexés, donnés à titre d'exemples non limitatifs, fera bien comprendre en quoi consiste l'invention et comment elle peut être réalisée.

### Brève description des figures

La Figure 1 est un schéma illustrant un véhicule automobile dans lequel st mis en oeuvre le procédé de contrôle conforme à l'invention.
Les Figures 2a et 2b sont des diagrammes illustrant le fonctionnement du procédé de contrôle selon des modes de réalisation non limitatifs de l'invention.

### Description détaillée de modes de réalisation préférentiels de l'invention

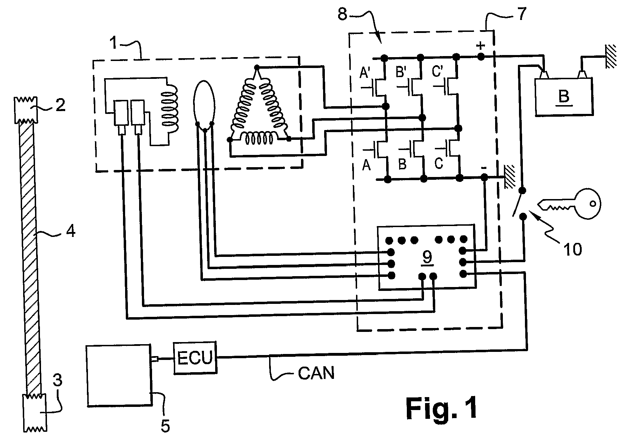

Sur la Figure 1 est représenté un véhicule automobile comportant :
- un moteur thermique 5 comportant une unité de contrôle appelé contrôle moteur ECU, ladite unité pouvant également être indépendante dudit moteur thermique. Le contrôle moteur ECU fournit notamment la vitesse moteur, la vitesse véhicule et la température thermique moteur.
- une machine électrique tournante séparée 1. Dans la suite de la description, un alterno-démarreur est pris comme exemple non limitatif de machine électrique tournante. Un démarreur classique peut être également pris comme exemple. Un tel alterno-démarreur comporte un rotor et un stator, un arbre se terminant par une poulie 2 qui est reliée à une poulie 3 du vilebrequin du moteur thermique par l'intermédiaire d'une courroie 4. Cet alterno-démarreur est monté à la place que prend habituellement l'alternateur. D'une manière générale, une machine électrique réversible telle q'un alterno-démarreur cumule deux fonctions distinctes, à savoir, d'une part, la fonction classique d'alternateur lorsque l'arbre du moteur thermique entraîne le rotor de la machine de manière à produire un courant électrique au stator, et, d'autre part, la fonction de démarreur lorsqu'à l'inverse, un courant appliqué au stator de la machine provoque la mise en rotation du rotor, lequel entraîne alors l'arbre du moteur thermique d'une manière analogue à un démarreur classique.
- une électronique de pilotage 7 dudit alterno-démarreur.

L'électronique de pilotage 7 comprend :
- un pont de transistors 8 qui constitue un convertisseur de puissance réversible et qui assure le pilotage en mode démarreur et le redressement synchrone en mode alternateur.
- un module de gestion 9 qui commande les différents transistors du convertisseur 8 et gère notamment les différentes fonctions suivantes :
   - puissance en modes démarreur et alternateur
   - régulation en mode alternateur
   - transition du mode démarreur au mode alternateur

Le module de gestion 9 est à cet effet alimenté par la tension de la batterie, référencée par B, à laquelle il est relié par l'intermédiaire d'un interrupteur 10 de contact du véhicule. Ledit module de gestion 9 communique avec le contrôle moteur ECU par un bus de communication CAN, ledit bus permettant de remonter des informations telles que notamment la vitesse du moteur thermique.

On notera que, selon un mode de réalisation préférentiel non limitatif, la stratégie de démarrage/arrêt appelée également stratégie « Stop and Go » déterminée par la commande de démarrage/arrêt est téléchargée dans une mémoire flash ou eeprom d'un dispositif de contrôle tel qu'un microcontrôleur du module de gestion 9 de l'alterno-démarreur.

Selon un autre mode de réalisation non limitatif, cette stratégie peut être également téléchargée dans une mémoire d'un dispositif de contrôle compris dans le contrôle moteur ECU.

Le module de gestion 9 qui gère ainsi, dans l'exemple pris, la stratégie « Stop and Go » reçoit des informations représentatives d'un état de fonctionnement du véhicule, lesdites informations provenant :
- de capteurs de mesure et de détection répartis dans le véhicule, comme des capteurs de mesure de températures (habitacle, circuits électroniques, etc) et des capteurs de détection de la position de différents organes (pédale d'embrayage, pédale de frein, levier de vitesse, etc), et
- du bus de communication CAN du véhicule telles que la vitesse du véhicule, la vitesse du moteur thermique, la température thermique du moteur etc,.

Ces informations doivent évidemment être parfaitement connues pour une mise en oeuvre convenable de la commande de démarrage/arrêt automatique.

C'est précisément lorsqu'il se produit un incident dans la transmission de ces informations au module 9 de gestion que la commande de démarrage/arrêt automatique bascule dans des modes dégradés dont la gestion est assurée par le procédé de contrôle.

Dans un mode de réalisation préférentiel, deux modes dégradés sont envisagés.

Le premier mode dégradé est activé si on perd l'une des informations fournies par les capteurs, par exemple la position de la pédale d'embrayage, la température de l'habitacle.... Par perte d'informations, on entend l'absence complète de signal provenant des capteurs ou des valeurs qui ne peuvent être validées parce que considérées comme incohérentes ou non plausibles. Ainsi, le dispositif de contrôle du module de gestion 9 ne reçoit plus aucune information de la part des capteurs, ou elles ne sont pas valides.

Le second mode dégradé est activé si on perd la communication sur le bus CAN, à savoir que le dispositif de contrôle ne reçoit alors plus aucune information via le bus de communication CAN, en particulier de la part du contrôle moteur ECU telles que la vitesse du véhicule et du moteur.... Le module de gestion 9 ne reçoit plus aucune information du bus de communication CAN.

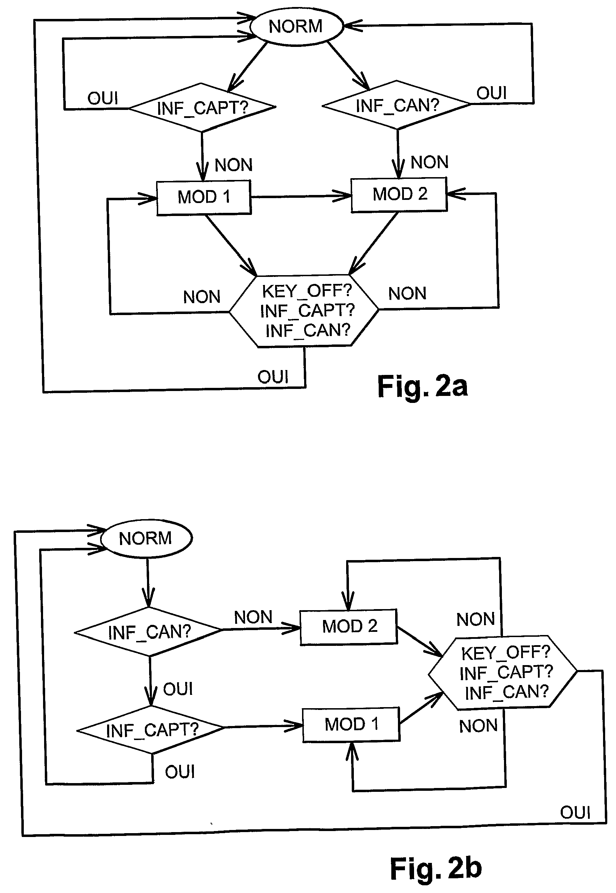

La gestion de ces modes dégradés est alors effectuée conformément au procédé de contrôle présenté sur les diagrammes des Figures 2a et 2b selon des modes de réalisation non limitatifs.

En fonctionnement normal NORM, c'est-à-dire lorsque la commande de démarrage/arrêt fonctionne de façon nominale, dans une première étape 1), on teste de façon permanente la présence puis la validité des informations INF_CAPT fournies par les capteurs CAPT. On notera que le bus de communication CAN permet d'avoir des renseignements sur le fonctionnement desdits capteurs. Ainsi, si un capteur CAPT ne fonctionne plus, on aura une information à ce sujet via le bus CAN.

Si une information capteur est présente, on teste sa validité. Par exemple si on a un capteur CAPT qui donne la position de la pédale d'embrayage en fonction de valeurs doivent être comprises entre 1 et 4V correspondant au pourcentage d'appui sur la pédale, et que l'information capteur que l'on reçoit est de 10V, cette information n'est pas valide.

Dans une **première sous-étape 1a**), en cas de test positif, la commande de démarrage/arrêt continue de fonctionner en mode nominal NORM, à savoir qu'elle envoie un ordre d'arrêt au contrôle moteur ECU du moteur thermique 5 pour un arrêt automatique et qu'elle envoie un ordre de démarrage à la machine électrique tournante pour un démarrage automatique du moteur 5.

Dans une **deuxième sous-étape 2a**), par contre, en cas de test négatif (au moins une information capteur n'est pas présente ou valide), on passe dans le premier mode dégradé MOD1, selon lequel on conserve une partie de la stratégie « Stop and Go » de la commande de démarrage/arrêt mais interdit tout arrêt automatique de ladite commande de démarrage/arrêt. Il n'est plus possible d'envoyer d'ordre d'arrêt automatique au contrôle moteur ECU du moteur thermique pour arrêter ledit moteur.

Cependant, il est toujours possible d'envoyer un ordre de démarrage à la machine électrique tournante, ici l'alterno-démarreur, pour démarrer automatiquement le moteur thermique. En effet, cela est notamment avantageux si le premier mode dégradé survient lorsque le moteur thermique a été arrêté automatiquement. A ce moment, on autorise un redémarrage automatique.

En fonctionnement normal, dans une **deuxième étape 2),** on teste de façon permanente la communication avec le bus CAN.

Dans une **première sous-étape 2a**), Si ce test est positif, c'est-à-dire si la communication avec le bus CAN n'est pas perdue, la commande continue de fonctionner en mode norminal.

Dans une **deuxième sous-étape 2b**), Par contre, si, à l'inverse, la communication avec le bus CAN est perdue, c'est-à-dire que l'on ne reçoit plus les informations INF_CAN fournies par ledit bus, on passe dans le deuxième mode dégradé MOD2, selon lequel la commande de démarrage/arrêt est alors inhibée : il n'est plus possible d'envoyer un ordre d'arrêt au contrôle moteur ECU du moteur thermique pour arrêter automatiquement ledit moteur, ni d'envoyer un ordre de démarrage à la machine électrique tournante, ici l'alterno-démarreur, pour démarrer automatiquement le moteur thermique. Seuls les démarrages à l'aide d'un démarreur classique additionnel sont autorisés, s'il est disponible.

Une autre conséquence du passage dans le deuxième mode dégradé est que, dans un mode de réalisation préférentiel, on configure l'alterno-démarreur en mode alternateur simple, l'alterno-démarreur ne pouvant plus servir pour démarrer automatiquement le moteur.

Dans un premier mode de réalisation illustré à la Figure 2a, on effectue la première et la deuxième étapes de façon simultanée et si les deux étapes ont pour résultat un test négatif, le deuxième mode dégradé MOD2 prévaut sur le premier mode dégradé MOD1.

Dans un deuxième mode de réalisation illustré à la Figure 2b, on effectue la première étape qu'en cas de test positif à la deuxième étape, c'est-à-dire que l'on teste les capteurs qu'après un test positif sur le bus de communication.

Dans un troisième mode de réalisation, si l'on se trouve dans le premier mode dégradé MOD1 et que l'on perd la communication sur le bus, on passe en deuxième mode dégradé MOD2.

Enfin, dans un mode de réalisation préférentiel, on active un signal d'avertissement pour informer le conducteur que la commande de démarrage/arrêt automatique est exécutée selon un mode dégradé. Le signal est de préférence un voyant lumineux permettant d'avertir le passage dans un quelconque des modes dégradés.

Comme l'indique les Figures 2a et 2b, la commande de démarrage/arrêt retrouve un fonctionnement normal dès que l'on récupère les informations manquantes, c'est-à-dire :
- en cas de test positif de présence et de validité des informations INF_CAPT fournies par les capteurs, i.e. lorsque lesdites informations capteurs INF_CAPT sont à nouveau disponibles, ou
- en cas de test positif de communication avec le bus CAN, i.e. lorsque la communication est rétablie, ou encore,
- si l'alimentation du réseau de bord du véhicule est coupée, i.e. la clé de contact du véhicule est en position inactive KEY_OFF permettant ainsi une réinitialisation de l'ensemble du système du véhicule, ledit système comportant les capteurs, le bus de communication CAN....

Bien entendu, l'invention ne se limite pas à ses modes dégradés et peut s'appliquer à tout autre mode dégradé dans lequel par exemple on inhibe le redémarrage automatique.

## Revendications

1. Procédé de contrôle d'une commande de démarrage/arrêt automatique d'un moteur thermique d'un véhicule, ladite commande utilisant des informations provenant de capteurs et d'un bus de communication de données, lesdites informations étant représentatives d'un état de fonctionnement du véhicule, **caractérisé en ce que** ledit procédé comporte les étapes de :
- tester la présence et la validité des informations fournies par lesdits capteurs, et, en cas de test négatif, définir un premier mode de la commande de démarrage/arrêt automatique dans lequel tout arrêt automatique est interdit jusqu'à réalisation d'une condition de fin d'interdiction,
- tester la communication avec le bus de communication de données, et en cas de test négatif, définir un deuxième mode de la commande de démarrage/arrêt automatique dans lequel ladite commande de démarrage/arrêt automatique est inhibée jusqu'à realisation d'une condition de fin d'inhibition.

2. Procédé de contrôle selon la revendication 1, **caractérisé en ce que** lorsque les informations fournies par lesdits capteurs sont à nouveau disponibles, on met fin à ladite interdiction.

3. Procédé de contrôle selon la revendication 1, **caractérisé en ce que** ladite condition de fin d'interdiction est une coupure d'alimentation du réseau d'un bord du véhicule.

4. Procédé de contrôle selon la revendication 1, **caractérisé en ce que** lorsque la communication avec le bus de communication de données est rétablie, on met fin à ladite inhibition.

5. Procédé de contrôle selon la revendication 1, **caractérisé en ce que** ladite condition de fin d'inhibition est une coupure d'alimentation d'un réseau de bord du véhicule.

6. Procédé de contrôle selon l'une quelconque des revendications 1 à 5, **caractérisé en ce que**, dans le deuxième mode, une machine électrique tournante réversible couplée audit moteur thermique du véhicule est configurée en mode alternateur, ladite machine étant destinée à démarrer automatiquement le moteur thermique du véhicule.

7. Procédé de contrôle selon l'une quelconque des revendications 1 à 6, **caractérisé en ce qu'**un signal d'avertissement de passage dans un dit premier ou second mode est activé.

8. Procédé de contrôle selon l'une quelconque des revendications 1 à 7, **caractérisé en ce que** le test sur les capteurs est effectué en cas de test positif sur le bus de communication.

9. Dispositif de contrôle d'une commande de démarrage/arrêt automatique d'un moteur thermique d'un véhicule, ladite commande utilisant des informations provenant de capteurs et d'un bus de communication de données, lesdites informations étant représentatives d'un état de fonctionnement du véhicule, **caractérisé en ce qu'**il comporte :
- des premiers moyens pour tester la présence et la validité des informations fournies par lesdits capteurs, et, en cas de test négatif, définir un premier mode de la commande de démarrage/arrêt automatique dans lequel tout arrêt automatique est interdit jusqu'à réalisation d'une condition de fin d'interdiction,
- des deuxièmes moyens pour tester la communication avec le bus de communication de données, et en cas de test négatif, définir un deuxième mode de la commande de démarrage/arrêt automatique dans lequel ladite commande de démarrage/arrêt automatique est inhibée jusqu'à réalisation d'une condition de fin d'inhibition.

10. machine électrique tournante réversible comportant un dispositif de contrôle de mise en oeuvre du procédé selon l'une quelconque des revendications 1 à 8.

## Patentansprüche

1. Verfahren zur Kontrolle einer automatischen Start-/Stopp-Steuerung eines Verbrennungsmotors eines Fahrzeugs, wobei die Steuerung Informationen verwendet, die von Sensoren und von einem Datenkommunikationsbus kommen, wobei die Informationen für einen Betriebszustand des Fahrzeugs repräsentativ sind, **dadurch gekennzeichnet, dass** das Verfahren die folgenden Schritte enthält:
- Testen des Vorhandenseins und der Gültigkeit der von den Sensoren gelieferten Informationen, und bei einem negativen Test Definieren einer ersten Betriebsart der automatischen Start-/Stopp-Steuerung, bei der jeder automatische Stopp bis zur Herstellung eines Verbotsendezustands verboten ist,
- Testen der Kommunikation mit dem Datenkommunikationsbus, und bei einem negativen Test Definieren einer zweiten Betriebsart der automatischen Start-/Stopp-Steuerung, bei der die automatische Start-/Stopp-Steuerung bis zur Herstellung eines Sperrendezustands gesperrt ist.

2. Kontrollverfahren nach Anspruch 1, **dadurch gekennzeichnet, dass**, wenn die von den Sensoren gelieferten Informationen erneut verfügbar sind, das Verbot beendet wird.

3. Kontrollverfahren nach Anspruch 1, **dadurch gekennzeichnet, dass** der Verbotsendezustand eine Versorgungsunterbrechung des Bordnetzes des Fahrzeugs ist.

4. Kontrollverfahren nach Anspruch 1, **dadurch gekennzeichnet, dass**, wenn die Kommunikation mit dem Datenkommunikationsbus wieder hergestellt ist, die Sperrung beendet wird.

5. Kontrollverfahren nach Anspruch 1, **dadurch gekennzeichnet, dass** der Sperrendezustand eine Versorgungsunterbrechung eines Bordnetzes des Fahrzeugs ist.

6. Kontrollverfahren nach einem der Ansprüche 1 bis 5, **dadurch gekennzeichnet, dass** im zweiten Betriebszustand eine mit dem Verbrennungsmotor des Fahrzeugs gekoppelte umkehrbare drehende elektrische Maschine in der Betriebsart Generator konfiguriert ist, wobei die Maschine dazu bestimmt ist, den Verbrennungsmotor des Fahrzeugs automatisch zu starten.

7. Kontrollverfahren nach einem der Ansprüche 1 bis 6, **dadurch gekennzeichnet, dass** ein Warnsignal des Übergangs in eine erste oder zweite Betriebsart aktiviert wird.

8. Kontrollverfahren nach einem der Ansprüche 1 bis 7, **dadurch gekennzeichnet, dass** der Test an den Sensoren im Fall eines positiven Tests am Kommunikationsbus durchgeführt wird.

9. Vorrichtung zur Kontrolle einer automatischen Start-/Stopp-Steuerung eines Verbrennungsmotors eines Fahrzeugs, wobei die Steuerung Informationen verwendet, die von Sensoren und von einem Datenkommunikationsbus kommen, wobei die Informationen für einen Betriebszustand des Fahrzeugs repräsentativ sind, **dadurch gekennzeichnet, dass** sie aufweist:
- erste Einrichtungen zum Testen des Vorhandenseins und der Gültigkeit der von den Sensoren gelieferten Informationen, und bei einem negativen Test Definieren einer ersten Betriebsart der automatischen Start-/Stopp-Steuerung, bei der jeder automatische Stopp bis zur Herstellung eines Verbotsendezustands verboten ist,
- zweite Einrichtungen zum Testen der Kommunikation mit dem Datenkommunikationsbus, und bei einem negativen Test Definieren einer zweiten Betriebsart der automatischen Start-/Stopp-Steuerung, bei der die automatische Start-/Stopp-Steuerung bis zur Herstellung eines Sperrendezustands gesperrt ist.

10. Umkehrbare drehende elektrische Maschine, die eine Vorrichtung zur Kontrolle der Durchführung es Verfahrens nach einem der Ansprüche 1 bis 8 aufweist.

## Claims

1. Method for controlling an automatic start/stop control of a heat engine of a vehicle, said control using information originating from sensors and from a data communication bus, said information being representative of a state of operation of the vehicle, **characterized in that** said method comprises the steps of:
- testing the presence and the validity of the information supplied by said sensors, and, in the case of a negative test, defining a first mode of the automatic start/stop control in which any automatic stop is prohibited until an end-of-prohibition condition is fulfilled,
- testing the communication with the data communication bus, and, in the case of a negative test, defining a second mode of the automatic start/stop control in which said automatic start/stop control is inhibited until an end-of-inhibition condition is fulfilled.

2. Control method according to Claim 1, **characterized in that**, when the information supplied by said sensors is once again available, said prohibition is terminated.

3. Control method according to Claim 1, **characterized in that** said end-of-prohibition condition is a disconnection of power supply from an on board network of the vehicle.

4. Control method according to Claim 1, **characterized in that** when the communication with the data communication bus is re-established, said inhibition is terminated.

5. Control method according to Claim 1, **characterized in that** said end-of-inhibition condition is disconnection of power supply from an on board network of the vehicle.

6. Control method according to any one of Claims 1 to 5, **characterized in that**, in the second mode, a reversible rotating electrical machine coupled to said heat engine of the vehicle is configured in alternator mode, said machine being intended to automatically start the heat engine of the vehicle.

7. Control method according to any one of Claims 1 to 6, **characterized in that** a signal warning of switchover to a so-called first or second mode is activated.

8. Control method according to any one of Claims 1 to 7, **characterized in that** the test on the sensors is performed in the case of a positive test on the communication bus.

9. Device for controlling an automatic start/stop control of a heat engine of a vehicle, said control using information originating from sensors and from a data communication bus, said information being representative of a state of operation of the vehicle, **characterized in that** it comprises:
- first means for testing the presence and the validity of the information supplied by said sensors, and, in the case of a negative test, defining a first mode of the automatic start/stop control in which any automatic stop is prohibited until an end-of-prohibition condition is fulfilled,
- second means for testing the communication with the data communication bus, and, in the case of a negative test, defining a second mode of the automatic start/stop control in which said automatic start/stop control is inhibited until an end-of-inhibition condition is fulfilled.

10. Reversible rotating electrical machine comprising a control device for implementing the method according to any one of Claims 1 to 8.
